# EUROPÄISCHE PATENTSCHRIFT

(11) **EP 1 339 816 B1**
(45) Veröffentlichungstag und Bekanntmachung des Hinweises auf die Patenterteilung: **11.08.2004**
(21) Anmeldenummer: 01994751.4
(22) Anmeldetag: 29.11.2001
(51) Int. Cl.: C11C 3/00, C10L 1/18, C11C 3/04, C11B 3/04

(54) **VERFAHREN ZUR VORBEHANDLUNG VON ROHÖLEN UND ROHFETTEN FÜR EINE HERSTELLUNG VON FETTSÄUREESTERN**
METHOD FOR PRETREATING CRUDE OILS AND RAW FATS FOR THE PRODUCTION OF FATTY ACID ESTERS
PROCEDE DE PRETRAITEMENT D'HUILES BRUTES ET DE GRAISSES BRUTES POUR LA PRODUCTION D'ESTERS D'ACIDES GRAS

(30) Priorität: 04.12.2000 DE 10060329; 20.12.2000 DE 10063967; 17.08.2001 DE 10139422
(43) Veröffentlichungstag der Anmeldung: 03.09.2003
(73) Patentinhaber: Westfalia Separator AG, 59302 Oelde (DE)
(72) Erfinder: BRUNNER, Karlheinz, 63538 Grosskrotzenburg (DE); FRISCHE, Rainer, 60529 Frankfurt (DE); RICKER, Rainer, 63128 Dietzenbach (DE)
(74) Vertreter: Lippert, Marianne
(86) Internationale Anmeldenummer: PCT/EP2001/013956
(87) Internationale Veröffentlichungsnummer: WO 2002/046339

(56) Entgegenhaltungen:
- EP-A- 0 131 991
- DE-C- 4 301 686
- US-A- 2 383 601
- US-A- 4 164 506

## Beschreibung

Die Erfindung betrifft ein Verfahren zur Vorbehandlung von Rohölen und Rohfetten für eine Herstellung von Fettsäureestern durch Umesterung von Ölen und Fetten zu sogenanntem Bio-Diesel, wie RME (Rapsmethylester).

Der Bio-Diesel-Herstellung liegt die in der Oleo-Chemie angewandte basenkatalysierte Umesterungsreaktion zu Grunde, bei der Glycerin-Fettsäureester in Form von Mono-, Diund Tri-Estern mit einem Alkali-Hydroxid oder einem Alkali-Alkoholat in Anwesenheit von geringfügig höheren als stöchiometrischen Mengen an primären Alkoholen (10% bis 50% Überschuß) bei erhöhter Temperatur von ca. 30° bis 60°C nahezu vollständig unter Abspaltung und Abscheidung von Glycerin zu den Fettsäureestern des primären oder sekundären, kurzkettigen (Kettenlänge von C1 bis C4) Alkohols reagieren.

Der Gehalt an freien Fettsäuren in Ölen und Fetten stört die Umesterungsreaktion dabei bekanntermaßen erheblich. Es gibt eine entsprechend große Anzahl von Schriften, die sich mit dem Problem der freien Fettsäuren auseinander setzen.

In der US 2 415 140 A erfolgt eine Behandlung des rohen Öls (mit z.B. 1,6 % Gehalt an freien Fettsäuren) mit einer Raffinationslösung aus in NaOH gelöstem Glycerin, woraufhin die so von freien Fettsäuren befreite Ölphase zentrifugal abgetrennt wird.

In der US 2 383 601 A werden Öle mit sehr hohen Gehalten an freien Fettsäuren (zwischen 10 und 50 %) so behandelt, daß eine basenkatalysierte Umesterung möglich wird. Dazu wird eine der Umesterung vorgeschaltete, sauer katalysierte Vorveresterung der freien Fettsäuren mit Methanol und konzentrierter Schwefelsäure bei erhöhter Temperatur durchgeführt. Bevorzugt wird der Alkohol überstöchiometrisch mit mindestens mehr als 50% Überschuß gegenüber der stöchiometrischen Menge zur Veresterung der freien Fettsäuren zugesetzt. Bei einer Variante des Verfahrens wird die bei 60 °C vorveresterte Mischung mit Wasser gewaschen, über Natriumsulfat getrocknet und gefiltert, bevor die alkalische Umesterung stattfindet. In einer Verfahrensvariante, in der die saure Vorveresterung und alkalische Umesterung unmittelbar hintereinander erfolgen, werden direkt nach der Vorveresterung Ethanol und Natriumethylat zugesetzt und die Reaktionsmischung wird bei 130 °C und unter Druck, um das Ethanol flüssig zu halten, umgeestert. Nach Abdestillierem von überschüssigem Ethanol wird das Reaktionsprodukt in einen Säuerungsbehälter gegeben, getrocknet und destilliert. Ohne diese zusätzliche Ansäuerung ist es hier nicht möglich, eine Glycerinphase abzutrennen. Im US-Patent US 4 164 506 werden große Mengen an Methanol sowohl für eine Vorveresterung der freien Fettsäuren als auch als Schleppmittel zugegeben. Nach der Vorveresterungsreaktion wird die von den freien Fettsäuren befreite Ölphase von der Alkoholphase, die darin gelöste Verunreinigungen und den sauren Katalysator enthält, abgetrennt. Ein hinreichender Trenneffekt läßt sich allerdings nur erzielen, wenn beträchtliche Mengen Methanol eingesetzt werden. Die so gewonnene aufgereinigte Ölphase wird basenkatalysiert umgeestert. In der DE 33 19 590 A wird bei einer sauer katalysierten Veresterung freier Fettsäuren ebenfalls ein Schleppmittel verwendet. Um die Alkoholmenge reduzieren zu können, wurde in der EP 0 127 104 B 1 als Schleppmittel Glycerin eingesetzt und die saure Vorveresterung der freien Fettsäuren in Anwesenheit von wasserfreiem, saurem Glycerin und in Gegenwart von Alkohol durchgeführt. Der Zusatz von wasserfreiem, saurem Glycerin hat hier die Aufgabe, als Katalysator zu dienen und gebildetes Reaktionswasser zu binden und bei seiner Abtrennung auszuschleusen (Schleppmittel). Auch hier kann das Glycerin samt saurem Katalysator nach destillativer Entfernung des Alkohols und des Reaktionswassers kreislaufgeführt werden. Die EP 0 192 035 B 1 schlägt als Alternative die Verwendung von festen Kationenaustauscherharzen in saurer Form vor, wobei hier das Reaktionswasser nach Abtrennung des Reaktionsgemisches aus dem Austauscherharz zu entfemen ist. In der DE 42 28 476 A wird zur sauren Vorveresterung mit einem stark saurem Ionenaustauscher in einem Festbettreaktor gearbeitet. In der DE 43 01 686 C wird nach erfolgter Umesterung die Esterphase mit Glycerin, Rohglycerin oder Glycerinphase aus einer vorangegangenen Umesterungsstufe gewaschen, um Wasch- und Prozeßwasser zu vermeiden, und zweistufig umgeestert. Die US 6 013 817 A offenbart ein aufwendiges mehrstufiges alkalisches Umesterungsverfahren, bei dem dem Umesterungsprodukt ebenfalls Glycerinphase zugesetzt wird, bevor die Glycerin- und Esterphasen getrennt werden. Abdestillierter Alkohol wird zurück in den Prozeß geleitet. Die abgetrennte Glycerinphase wird mit Säure neutralisiert und es werden eine organische Phase mit Fettsäuren und Estern und wiederum eine Glycerinphase abgetrennt, die anschließend zur Umesterung dieser organischen Phase ausgenutzt wird.

In der EP 0 131 991 A und der WO 00 75098 A wird demgegenüber die alkalische Glycerinphase aus einer bereits erfolgten Umesterung zur Vorbehandlung eines Rohöles genutzt, um die freien Fettsäuren aus dem Ausgangsöl zu extrahieren und gleichzeitig mit anderen schädlichen Begleitstoffen wie Phosphatiden von dem Ausgangsöl abzutrennen. Die Fettsäuren werden dabei unter Verwendung des bereits zur Umesterung genutzten Katalysators neutralisiert.

Die Erfinder der vorliegenden Anmeldung stellten jedoch fest, daß durch diese Verfahrensweise zwar die freien Fettsäuren auf wirtschaftliche Weise beseitigt werden können, ein erhöhter Phosphorgehalt jedoch in der Regel nicht unter den für Biodiesel zulässigen Grenzwert gesenkt werden kann.

So enthalten rohe Preß- bzw. Lösemittelextraktionsöle und -fette stets Schleimstoffe, die schwer zerstörbare Öl/Wasser-Emulsionen bilden. Dies sind im wesentlichen wasserquellbare Schleimstoffe, z.B. Lecithin (Phosphatide), und die nicht wasserquellbaren Schleimstoffe in Form anderer phosphorhaltiger Verbindungen. Hierdurch wird eine saubere Phasentrennung z.B. zwischen Glycerin und gebildetem Fettsäureester verhindert. Ferner wird auch das zum Entfernen von Glycerinester notwendige Waschen des erzeugten Fettsäureesters mit Wasser durch die Emulsionen behindert.

Da ohnehin Phosphor im Biodiesel nur in sehr geringen Mengen vorhanden sein darf und die Umesterungsreaktion allein zu hohe Restphosphorgehalte nicht zuverlässig beseitigt, wird in der Praxis bevorzugt sowohl der "chemischen" Naß- wie auch der "physikalischen" Trockenentsäuerung der rohen Ausgangsöle eine aufwendige Entschleimung vorgeschaltet. Das Öl wird heiß, z.B. mit 75% bis 85%iger Phosphorsäure, zugesetzt in einer Menge von etwa 0,05 Gew.% bis 0,1 % Gew. bezogen auf das Öl, intensiv vermischt und nach längerer Verweilzeit anschließend mit wässriger Lauge gewaschen. Bei sogenannten Degumming werden die im Öl gelöst vorhandenen und damit durch Sedimentation nicht abtrennbaren Schleimstoffe mit Wasser (Wasserentschleimung) oder Säure bzw. wässriger Säure (saure Entschleimung) in hydratisierte, in Öl nicht lösliche und damit als Niederschlag abtrennbare Schleimstoffe überführt. Bei ihrer Abtrennung wird jedoch stets auch Öl mitgerissen und somit einer nachfolgenden Umesterung entzogen.

Bei heiß gepreßten und z.B. mittels Hexan extrahierten Ölen sind derartige Maßnahmen in der Regel unerläßlich. So ist bei der Heißpressung/Extraktion bekanntermaßen die Ausbeute an Öl höher, jedoch verbunden mit dem Nachteil, daß hier der Schleimstoffgehalt deutlich höher ist als bei kalt gepreßtem Öl.

Der Erfindung liegt die Aufgabe zugrunde, ein Vorbehandlungsverfahren anzugeben, mit dem Öle und Fette, die Schleimstoffe enthalten, kostengünstig und dennoch effektiv für eine nachfolgende alkalisch katalysierte Umesterung vorbehandelt werden können.

Diese Aufgabe wird durch den Gegenstand des Anspruchs 1 gelöst. Bevorzugte Weiterbildungen sind in den Unteransprüchen gekennzeichnet.

Des weiteren betrifft die Erfindung auch den Gegenstand eines Verfahren zum Herstellen von Fettsäureestern primärer und/oder sekundärer Alkohole aus rohen, ungereinigten freie Fettsäuren und Schleimstoffe enthaltenden Ölen oder Fetten oder aus mit freien Fettsäuren beladenen Altölen der Emährungsindustrie, wobei eine Vorbehandlung des Öls oder Fettes nach Anspruch 1 und 2 erfolgt, wobei das alkalische Glycerin gemäß Anspruch 2 aus einer nachfolgenden Umesterungsstufe in den Prozeß zurückgeführt wird.

Die erfindungsgemäße Entschleimung nach Anspruch 1 läßt sich im Gegensatz zu den bekannten sauer katalysierten Vorveresterungen von freien Fettsäuren selbst kalt bei Raumtemperatur in sehr kurzer Zeit mit vergleichbarer Menge Phosphorsäure oder auch Schwefelsäure vollständig durchführen, wenn der zugesetzten Säure die etwa gleiche Menge eines kurzkettigen Alkohols (primärer oder sekundärer Alkohol in der Regel bis C4), insbesondere Methanols, zugesetzt wird. Bei dem kurzkettigen Alkohol handelt es sich um einen handelsüblichen wasserfreien Alkohol. Die Quellung bzw. die Konditionierung der Schleimstoffe erfolgt bei der Homogenisierung der Mischung z.B. in einem Mischer sehr schnell. Der aus so in nur 15 Minuten vorbehandeltem rohem Raps-Öl mit einem Ausgangsphosphorgehalt von 175 mg Phosphor pro kg Öl durch alkalisch katalysierte Umesterung erzeugte Fettsäuremethylester enthält weniger als 1mg Phosphor/kg Öl, ein Wert, der nur schwer nach dem Stand der Technik erreichbar ist, selbst wenn von raffiniertem Öl ausgegangen wird.

Die Abtrennung der Schleimstoffe kann durch Dekantieren oder Filtrieren erfolgen. Erfindungsgemäß werden die Schleimstoffe bevorzugt durch Zentrifugieren abgetrennt.

Es ist überraschend, daß durch den geringfügigen Alkoholzusatz gegenüber dem Degumming, bei dem die Abtrennung der Schleimstoffe mittels einer Säure nur in Anwesenheit von Wasser erfolgt, eine derart deutliche Wirkung auf die Schleimstoffe erzielt wird. So werden die Schleimstoffe beim erfindungsgemäßen Alkoholzusatz sehr schnell durch Quellung in eine im Öl unlösliche Form überführt und auf diese Weise ausfällbar gemacht. Beim Übergang des Alkohols aus der zugesetzten sauren alkoholischen Phase in die Ölphase gelangen ferner zusätzlich zumindest Spuren der zugesetzten Säure mit in das Öl, wobei diese Säurespuren offenbar auch die Ausfällung der nur sauer ausfällbaren Schleimstoffe ermöglichen.

Erfindungsgemäß wird konzentrierte Säure eingesetzt, die kein oder entsprechend wenig Wasser enthält. Im Falle der bevorzugt eingesetzten Phophorsäure wird mit 75%iger bis 85%iger handelsüblicher Säure gearbeitet. Bei Schwefelsäure kann auch mit 100%iger Säure gearbeitet werden. Grundsätzlich wird vorzugsweise eine weniger als 70%ige konzentrierte wässrige Säure nicht eingesetzt. Eine weitere Verdünnung der Säure findet lediglich durch den zugesetzten Alkohol statt.

Die Mischung aus konzentrierter Säure und dem Alkohol wird bezogen auf das eingesetzte Öl oder Fett mit 0,1 Gew.% bis 5 Gew.%, bevorzugt bis 2 Gew.% eingesetzt. Je nach Qualität des Öls oder Fetts und der Konzentration der Säure wird das Gewichtsverhältnis Säure zu Alkohol in dieser Mischung auf Werte zwischen 2:1 und 1:5 , bevorzugt 1:1 bis 1:2 eingestellt. Bei einem bevorzugten Wert der zugegebenen Mischung von beispielsweise 1 Gew.% bezogen auf das Öl oder Fett beträgt somit der Säureanteil zwischen 0,66 Gew.% und 0,2 Gew.%.

Das nach Anspruch 1 behandelte Öl kann wiederum bei Raumtemperatur gemäß Anspruch 2 gewaschen werden, um auch den Gehalt an freien Fettsäuren vor der Umesterung zu senken und gleichzeitig die Schleimstoffe abzutrennen. Selbstverständlich läßt sich das Verfahren nach Anspruch 1 auch auf Öle und Fette anwenden, die frei von freien Fettsäuren sind oder nur sehr wenig freie Fettsäuren enthalten. In diesem Fall kann man davon absehen, die genannte Waschung vorzunehmen und die Schleimstoffe direkt durch Zentrifugieren abtrennen. Sind allerdings im Öl oder Fett nennenswerte Mengen von alkalisch angreifbaren Schleimstoffen enthalten, so empfiehlt sich die nachgeschaltete Waschung mit der Glycerinphase.

Danach werden die freien Fettsäuren und der saure Katalysator in den nach Anspruch 1 zur Entschleimung vorbehandelten Ölen und Fetten durch Waschen mit einer basischen Glycerinphase entfernt, die aus einer alkalisch katalysierten Umesterung eines Öles oder Fettes entnommen wird und somit ohnehin anfällt und keine zusätzlichen Kosten verursacht. Bevorzugt handelt es sich hierbei um die Umesterung, die unmittelbar auf die erfindungsgemäße Vorbehandlung folgt. Die basische Glycerinphase ist eine wasserfreie, Restalkohol (zumeist Restmethanol), Seifen und alkalischen Restkatalysator enthaltende Glycerinphase. Der Restalkoholgehalt (Restmethanolgehalt) im Glycerin ermöglicht trotz der hohen Viskosität des Öls und des Glycerins eine sehr schnelle Neutralisation und Abtrennung der gebildeten Seifen.

Eine vollständige Abtrennung der Waschglycerinphase z.B. mittels Polierzentrifugen ist nicht erforderlich. Es stellte sich sogar heraus, daß die bei einfacher zentrifugaler Abtrennung z.B. in einem Trenn-Dekanter als Mikrotröpfchen in der abgetrennten Ölphase verbleibenden 1 bis 5 Gew.% der ursprünglichen Glycerinphase die nachfolgende alkalisch katalysierte Umesterung mit Methanol (oder einem anderen primären oder sekundären, kurzkettigen Alkohol) sogar beschleunigen und die zur Umesterung parallel verlaufende Verseifung des Öls unterdrücken.

Die Waschung des Öls kann bei Raumtemperatur erfolgen, wobei ein kurzer Kontakt der Glycerinphase z.B. in einem Dynamikmischer oder Statikmischer und eine direkte Trennung der Phasen in einem nachgeschalteten Separator erfolgen können. Im Dynamikmischer werden die zu mischenden, ineinander nicht lösbaren Flüssigkeiten durch Zerteilen in kleine Tröpfchen intensiv miteinander vermischt. Nach einer bevorzugten Variante erfolgen sowohl Vermischung als auch Trennung in einem Extraktionsdekanter, d.h. eine Vollmantel-Schneckenzentrifuge, in der die Glycerinphase sich besonders gut von der übrigen flüssigen Phase abtrennen läßt.

Bei der Waschung des Öls bzw. Fettes kommt es auch zu einer gewissen alkalischen Entschleimung, bei der gegebenenfalls auch Anteile phosphorhaltiger Ölbegleitstoffe entfernt werden. Ein Mitschleppen von Neutralöl mit der Seife gemäß der üblichen Verseifung mit wässriger Lauge beim erfindungsgemäßen Waschen mit alkalischem Glycerin tritt nicht auf. Dies ist von erheblichem Vorteil für eine nachfolgende Aufbereitung der Seifen zu freien Fettsäuren.

Im folgenden wird die Erfindung anhand der Zeichnungen näher erläutert. Es zeigen
FIG. 1 in schematischer Weise eine mögliche alkalische Umesterung, für die die erfindungsgemäße Vorbehandlung des Öles oder Fettes angewandt wird und deren alkalisches Glycerin aus der Umesterung in einer Weiterbildung der erfindungsgemäßen Vorbehandlung einsetzbar ist, und
FIG.2 in schematischer Weise eine erfindungsgemäße Säureentschleimung mit bevorzugter nachgeschalteter Waschung mit alkalischem Glycerin.

Die Erfindung wird für Rohöle (nicht raffiniert, d.h. weder entschleimt noch entsäuert) beschrieben, ist jedoch ebenfalls auf rohe, verflüssigte Fette anwendbar.

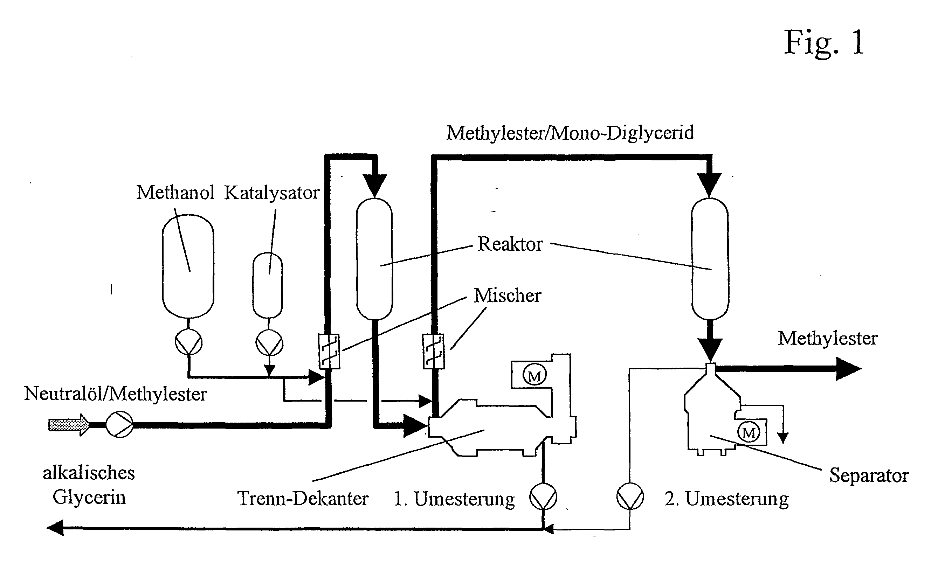

Gemäß FIG.1 wird die alkalische Umesterung mit Methanol als Beispiel für einen bevorzugt eingesetzten Alkohol zweistufig durchgeführt, wobei nach der ersten Umesterungsstufe mit einem Trenn-Dekanter (Vollmantenschneckenzentrifuge) der Methylester und noch vorhandene Mono- und Diglyceride vom alkalischen Glycerin abgetrennt werden. Die Trennung in Methylester und alkalisches Glycerin erfolgt nach der zweiten Umesterungstufe z.B. in einem Separator mit Tellerpaket.

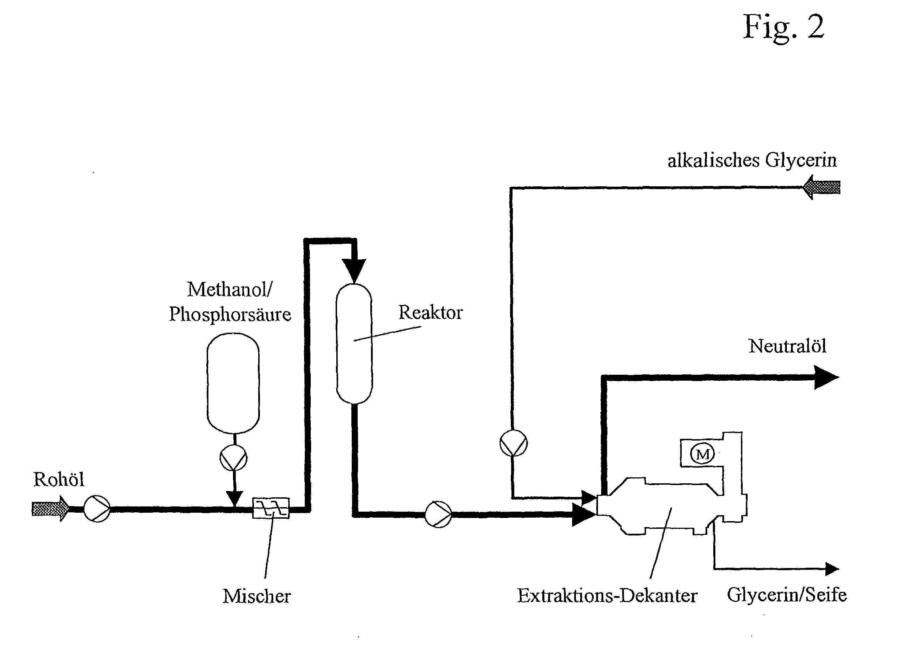

In FIG. 1 ist angedeutet, daß sowohl aus der ersten als auch zweiten Umesterungsstufe zentrifugal als schwere Phase alkalisches abgetrenntes Glycerin abgeführt wird. Dieses abgeführte alkalische Glycerin mit Restgehalten an Methanol und Katalysator (z.B. 20 Gew.% Methanol und 15 Gew.% KOH) wird gemäß FIG.2 zusammen mit dem der Säureentschleimung unterzogenem Rohöl in einen Extraktions-Dekanter gegeben (Vollmantelschneckenzentrifuge mit zwei Eingängen für die flüssige Rohölphase und die viskose flüssige alkalische Glycerinphase). Im Dekanter erfolgt eine Durchmischung und Trennung dadurch, daß am Eintritt der spezifisch schwereren Glycerinphase in die rotierende Dekantertrommel eine intensive Durchmischung mit der spezifisch leichteren Ölphase erfolgt und ebenso die getrennt zugeführte Ölphase sich bei ihrem Eintritt intensiv mit der vorgelegten Glycerinphase vermischt. Im unmittelbaren Anschluß an die intensive Vermischung der beiden Phasen erfolgt dann im Zentrifugalfeld die Phasentrennung. Aus dem Dekanter wird als leichte Phase entschleimtes, von freien Fettsäuren befreites Neutralöl abgführt. Als schwere Phase fällt eine mit Seifen und Schleimstoffen beladene Glycerinphase an.

Zur Verbesserung der Waschwirkung kann der Glycerinphase noch Alkohol (Methanol bzw. ein anderer kurzkettiger Alkohol) zugesetzt werden.

Statt eines bevorzugten Extraktions-Dekanters kann auch ein Separator (Tellerzentrifuge) mit Vormischstufe verwendet werden.

Die aufgezeigte Vorbehandlung des Öls mittels Säure und Alkohol zur Schleimstoffabtrennung kann auch bei Speisefetten vorteilhaft eingesetzt werden, da zum einen die zugesetzte Alkoholmenge keinen spürbaren Kostenfaktor darstellt und der Alkohol zum anderen im üblichen Aufbereitungsprozess ohnehin vollständig entfernt wird.

Wie bereits erwähnt, kann die Temperatur bei der erfindungsgemäßen Behandlung im Gegensatz zu den bekannten Heißverfahren niedrig sein. Bevorzugt wird bei Normaldruck zwischen 20°C und 40°C- 50°C, in Ausnahmefällen bis 60 oder 70 °C, gearbeitet. Bei Raumtemperatur konnte eine erfolgreiche Vorbehandlung in weniger als 30 Minuten durchgeführt werden. Bei höheren Temperaturen verkürzt sich diese Zeitspanne entsprechend. Bei einer sauren Vorveresterung liegen die Zeitspannen um ein Vielfaches höher.

Man kann damit in einem Temperaturbereich arbeiten, der optimal für die alkalische Umesterung ist, die in vielen Fällen unterhalb 50 °C abläuft. Somit entfällt jegliche Kühlmaßnahme zwischen der Vorbehandlungsstufe und Umesterungsstufe.

### Beispiel:

Ein Ansatz aus Rapsrohöl (174 ppm Phosphor, Säurezahl 2,5) von etwa 55 kg wurde in der Vorlage (80 L Volumen) mit 275 g einer Mischung aus 160 g 85 %-iger Phosphorsäure und 115 g wasserfreiem Methanol vermischt und 15 Minuten lang bei Raumtemperatur (25-30 °C) mittels Chemiekreiselpumpe zur intensiven Durchmischung umgepumpt.

Zunächst trübte die Mischung beim Umpumpen ein, um dann nach etwa 5 Minuten aufzuklaren. Nach Abstellen der Umwälzpumpe und des Rührwerks und während des Abfahrens der Mischung konnten große dunkelbraune Flocken beobachtet werden, die aus dem Öl ausflockten.

Das so vorbehandelte Rohöl wurde im Anschluß im freien Gefälle mit etwa 10 Gew.% alkalischem Glycerins aus einer alkalischen Umesterung über eine Mischstufe (bestehend aus einem weiteren Rührgefäß mit etwa 300 ml effektivem Volumen) vor dem Zenrifugeneinlauf direkt in eine Zentrifuge (SA 1 -0 1, Westfalia Separator AG, Oelde) geführt und kontinuierlich getrennt. Die Zulaufleistung lag bei etwa 13 kg/h Öl und etwa 1,3 kg Glycerin/h.

Das ablaufende Neutralöl war noch leicht trüb und wurde daher mit einer (nicht dargestellten) Tellerzentrifuge (TA 1 -0 1, Westfalia Separator AG, Oelde) nachpoliert.

Eine anschließende saure Spaltung der im Glycerin gelösten Seife ergab die Fettsäuremenge der vorher im Rohöl enthaltenen freien Fettsäuren. Hierzu wurden die durch Säure freisetzbaren Fettsäuremengen im Glycerin vor und nach der Waschung bestimmt und verglichen. Somit war gewährleistet, daß bei obiger Vorbehandlung keine Neutralölverseifung stattgefunden hatte.

Das so gewonnene entschleimte Neutralöl wurde danach in üblicher Weise alkalisch (mit KOH) unten Zugabe von Methanol umgeestert. Der Phosphorgehalt des so gewonnenen Methylesters lag unter 1 ppm.

Bei größeren Mengen wurde in weiteren Versuchen auch mit Trenn-Dekantern gemäß den Figuren gearbeitet. Dies empfiehlt sich im übrigen dann, wenn das Rohöl zusätzlich stark mit festen Verunreinigungen befallen ist.

## Patentansprüche

1. Verfahren zur Vorbehandlung von rohen Ölen und Fetten für eine nachfolgende alkalische Umesterung mit primären und/oder sekundären Alkoholen,
**dadurch gekennzeichnet,**
**daß** das mit Schleimstoffen beladene rohe Öl oder Fett mit einer Mischung behandelt wird, die bezogen auf das Öl oder Fett mit 0,1 Gew.% bis 5 Gew. % eingesetzt wird und einen Alkohol und konzentrierte Säure umfaßt, und daß anschließend die durch die Behandlung gequollenen und nicht mehr öl- bzw. fettlöslichen Schleimstoffe abgetrennt werden.

2. Verfahren nach Anspruch 1,
**dadurch gekennzeichnet,**
**daß** das behandelte Öl oder Fett zur Abtrennung der Schleimstoffe und freien Fettsäuren mit einer alkalischen Glycerinphase gewaschen wird, die aus einer alkalischen Umesterungsreaktion der genannten Art stammt, und daß nach dem Waschvorgang die nunmehr mit Seifen der freien Fettsäuren und Schleimstoffen beladene Glycerinphase als schwere Phase vom Neutralöl abgetrennt wird.

3. Verfahren nach Anspruch 1 und Anspruch 2,
**dadurch gekennzeichnet,**
**daß** die Behandlung des Öls oder Fettes zwischen Raumtemperatur und 50 °C erfolgt.

4. Verfahren nach Anspruch 2,
**dadurch gekennzeichnet,**
**daß** die Waschung und Trennung zentrifugal, bevorzugt mit einer kontinuierlich arbeitenden Zentrifuge, insbesondere in einem Extraktions-Dekanter durchgeführt werden.

5. Verfahren nach einem der vorhergehenden Ansprüche,
**dadurch gekennzeichnet,**
**daß** die Säure aus der Gruppe Phosphorsäure, Schwefelsäure und p-Toluolsulfonsäue ausgewählt wird.

6. Verfahren nach Anspruch 1 oder 2,
**dadurch gekennzeichnet,**
**daß** die Schleimstoffe bzw. das mit Seifen und Schleimstoffen beladene Glycerin zentrifugal abgetrennt werden.

7. Verfahren nach einem der vorhergehenden Ansprüche,
**dadurch gekennzeichnet,**
**daß** der Alkohol ausgewählt wird aus der Gruppe kurzkettiger primärer und sekundärer Alkohole, insbesondere Methanol, Ethanol, Propanol, Butanol, Isopropanol und Isobutanol.

8. Verfahren nach einem der vorhergehenden Ansprüche,
**dadurch gekennzeichnet,**
**daß** die Behandlung in der Mischung aus Alkohol und verdünnter Säure in einem Zentrifugalmischer und anschließendem Verweilbehälter erfolgt.

9. Verfahren nach einem der vorhergehenden Ansprüche,
**dadurch gekennzeichnet,**
**daß** die Säure eine Konzentration von mindestens 70 % aufweist und daß das Gewichtsverhältnis Säure zu Alkohol in der Mischung abhängig von der Säurekonzentration und der Qualität des Öls oder Fetts zwischen 2:1 und 1:5 eingestellt wird.

10. Verfahren zum Herstellen von Fettsäureestem primärer und/oder sekundärer Alkohole aus rohen, freie Fettsäuren und Schleimstoffe enthaltenden Ölen oder Fetten oder aus mit freien Fettsäuren beladenen Altölen der Emährungsindustrie,
**dadurch gekennzeichnet,**
**daß** eine Vorbehandlung des Öls oder Fettes nach Anspruch 1 und 2 erfolgt, wobei das alkalische Glycerin gemäß Anspruch 2 aus einer nachfolgenden Umesterungsstufe in den Prozeß zurückgeführt wird.

11. Verfahren nach einem der Anspruch 10,
**dadurch gekennzeichnet,**
**daß** die Vorbehandlung des weiteren nach einem der Ansprüche 3 bis 9 erfolgt.

## Claims

1. Method for pretreating crude oils and fats for subsequent alkaline transesterification with primary and/or secondary alcohols,
**characterized in**
**that** the crude oil or fat loaded with slimy substances is treated with a mixture used at 0.1 wt.% to 5 wt.% in relation to the oil or fat and containing an alcohol and concentrated acid and that said slimy substances swelled and being no longer oil-soluble or fat-soluble due to the treatment are subsequently separated.

2. Method according to claim 1,
**characterized in**
**that** the treated oil or fat is washed for separating said slimy substances and free fatty acids with an alkaline glycerol phase originating from an alkaline transesterification reaction of the kind referred to, and that, after said washing process, the glycerol phase now loaded with soaps of the free fatty acids and slimy substances is separated as heavy phase from the neutral oil.

3. Method according to claim 1 and claim 2,
**characterized in**
**that** the treatment of the oil or the fat is performed between room temperature and 50°C.

4. Method according to claim 2,
**characterized in**
**that** washing and separating are performed centrifugally, preferably by means of a continuously operating centrifuge, particularly in an extraction decanter.

5. Method according to one of the foregoing claims,
**characterized in**
**that** the acid is selected from the group consisting of phosphoric acid, sulphuric acid and p-toluene sulphonic acid.

6. Method according to claim 1 or 2,
**characterized in**
**that** said slimy substances and the glycerol loaded with soaps and slimy substances, respectively, are centrifugally separated.

7. Method according to one of the foregoing claims,
**characterized in**
**that** the alcohol is selected from the group of short-chain primary and secondary alcohols, particularly methanol, ethanol, propanol, butanol, isopropanol and isobutanol.

8. Method according to one of the foregoing claims,
**characterized in**
**that** the treatment in the mixture of alcohol and acid diluted is performed in a centrifugal mixer and subsequently in a container for dwelling.

9. Method according to one of the foregoing claims,
**characterized in**
**that** the acid has a concentration of at least 70% and that the acid to alcohol weight ratio in the mixture, depending on the acid concentration and the quality of the oil or the fat, is adjusted to between 2:1 and 1:5.

10. Method for producing fatty acid esters of primary and/or secondary alcohols from crude oils or fats containing free fatty acids and slimy substances or from waste oils loaded with free fatty acids from the food industry,
**characterized in**
**that** pretreatment of the oil or the fat is performed in accordance with claim 1 and 2 wherein the alkaline glycerol is recycled according to claim 2 from a subsequent transesterification stage into the process.

11. Method according to claim 10,
**characterized in**
**that** further pretreatment is performed in accordance with one of claims 3 to 9.

## Revendications

1. Procédé de prétraitement d'huiles et de graisses brutes pour une transestérification basique ultérieure avec des alcools primaires et/ou secondaires,
**caractérisé en ce que**
l'on traite l'huile ou la graisse brute chargée de substances mucilagineuses avec un mélange, que l'on met en oeuvre à raison de 0,1% à 5% en poids par rapport à l'huile ou à la graisse, et qui comprend un alcool et un acide concentré, et **en ce que** l'on sépare ensuite les substances mucilagineuses gonflées par le traitement et qui ne sont plus solubles dans les huiles ou les graisses.

2. Procédé selon la revendication 1,
**caractérisé en ce que**
l'on lave l'huile ou la graisse traitée pour séparer les substances mucilagineuses et les acides gras libres avec une phase glycérique basique, qui provient d'une réaction de transestérification basique du type mentionné, et **en ce qu'**après l'étape de lavage, on sépare de l'huile neutre la phase glycérique désormais chargée de savons des acides gras libres et des substances mucilagineuses en tant que phase lourde.

3. Procédé selon la revendication 1 et la revendication 2,
**caractérisé en ce que**
l'on réalise le traitement de l'huile ou de la graisse à une température comprise entre la température ambiante et 50°C.

4. Procédé selon la revendication 2,
**caractérisé en ce que**
l'on réalise le lavage et la séparation par centrifugation, de préférence à l'aide d'une centrifugeuse fonctionnant en continu, en particulier dans un décanteur.

5. Procédé selon l'une quelconque des revendications précédentes,
**caractérisé en ce que**
l'on choisit l'acide dans le groupe constitué par l'acide phosphorique, l'acide sulfurique et l'acide p-toluènesulfonique.

6. Procédé selon la revendication 1 ou la revendication 2,
**caractérisé en ce que**
l'on sépare les substances mucilagineuses ou la glycérine chargée des savons et des substances mucilagineuses par centrifugation.

7. Procédé selon l'une quelconque des revendications précédentes,
**caractérisé en ce que**
l'on choisit l'alcool dans le groupe constitué par les alcools primaires et secondaires à chaîne courte, en particulier le méthanol, l'éthanol, le propanol, le butanol, l'isopropanol et l'isobutanol.

8. Procédé selon l'une quelconque des revendications précédentes,
**caractérisé en ce que**
l'on réalise le traitement dans le mélange composé d'alcool et d'acide dilué dans un mélangeur centrifuge puis dans une cuve de repos.

9. Procédé selon l'une quelconque des revendications précédentes,
**caractérisé en ce que**
l'acide présente une concentration d'au moins 70% et que le rapport pondéral acide à alcool dans le mélange est ajusté entre 2:1 et 1:5 en fonction de la concentration d'acide et de la qualité de l'huile ou de la graisse.

10. Procédé de préparation d'esters d'acides gras d'alcools primaires et/ou secondaires à partir d'huiles et de graisses contenant des substances mucilagineuses et des acides gras libres bruts ou à partir d'huiles usées chargées en acides gras libres issues de l'industrie agro-alimentaire,
**caractérisé en ce que**
l'on réalise un prétraitement de l'huile ou de la graisse selon la revendication 1 et la revendication 2, dans lequel la glycérine basique selon la revendication 2 provenant d'une étape de transestérification ultérieure est recyclée dans le procédé.

11. Procédé selon la revendication 10,
**caractérisé en ce que**
l'on réalise le prétraitement en outre selon l'une quelconque des revendications 3 à 9.
